## Europäisches Patentamt

# European Patent Office

# Office européen des brevets

(19)

(11) Veröffentlichungsnummer: **0 010 716**
**A1**

(12)

# EUROPÄISCHE PATENTANMELDUNG

(21) Anmeldenummer: **79104082.7**

(22) Anmeldetag: **22.10.79**

(51) Int. Cl.³: **G 11 B 27/08**
**//G11B27/02, H04N5/78**

(30) Priorität: **02.11.78 DE 2847440**

(43) Veröffentlichungstag der Anmeldung: **14.05.80**
**Patentblatt 80/10**

(84) Benannte Vertragsstaaten: **AT BE CH DE FR GB IT NL SE**

(71) Anmelder: **BASF Aktiengesellschaft, Carl-Bosch-Strasse 38, D-6700 Ludwigshafen (DE)**

(72) Erfinder: **Schomann, Klaus Dieter, Dr. Dipl.-Phys., Kopernikusstrasse 47, D-6700 Ludwigshafen (DE)**

(54) Verfahren und Anordnung zum Verändern von Videoaufzeichnungen mit oder ohne Audioinformation in Videoaufzeichnungs-/Wiedergabesystemen, insbesondere Magnet-Aufzeichnungs-/Wiedergabesystemen.

(57) Ein Verfahren und eine Vorrichtung zum Verändern von Videoaufzeichnungen mit oder ohne Audioinformation mit einem einzigen Videoaufzeichnungs-/Wiedergabegerät beinhalten Lesen und Nauaufzeichnung der ursprünglich aufgezeichneten Signale einer ersten Signalspur (US) von mehreren parallelen Signalspuren eines Aufzeichnungsträgers auf dieselbe erste Signalspur oder auf eine zweite Signalspur (OS) sowie Löschen der ursprünglich aufgezeichneten Signale, um Signalspuren für weitere Neuaufzeichnungen freizumachen. Die Vorrichtungen betreffen Aufzeichnungs-/Wiedergabe- und Löschkopfkombinationen, sowie eine Schaltungsversion zum Abtrennen, Verändern und Neuaufzeichnen der Video- und/oder Audiosignale.

BASF Aktiengesellschaft                    O.Z.0050/033500

Verfahren und Anordnung zum Verändern von Videoaufzeichnungen mit oder ohne Audioinformation in Videoaufzeich-
nungs-/Wiedergabesystemen, insbesondere Magnet-Aufzeich-
nungs-/Wiedergabesystemen

Die Erfindung betrifft Verfahren und Anordnungen zum Verändern von longitudinalen Videoaufzeichnungen mit oder
ohne Audioinformation in Aufzeichnungs-/Widergabesystemen
mit zueinander parallelen Signalspuren, insbesondere Magnetspuren, die urspünglich aufgezeichnete Signale enthalten, die mittels eines Wiedergabekopfes lesbar und mittels
eines Aufnahmekopfes aufzeichenbar sind.

In Magnetband-Systemen, in denen die Information auf
longitudinalen Magnetspuren aufgezeichnet werden, besteht
die Möglichkeit, den Ton auf separaten Spuren oder auf
dem Rasen zwischen den Videospuren aufzuzeichnen. Werden
jedoch wegen der besseren Ausnutzung der Magnetbandkapazität oder wegen der Vermeidung von Störungen Video- und
Audiosignale zusammengefaßt und in einer Magnetspur aufgezeichnet, ist eine nachträgliche Änderung der Audio-
-Information ohne Beeinflussung der Video-Information
nur mittels eines zweiten Videoaufzeichnungsgeräts bekannt.

Es ist mit der DE-AS 10 63 397 für Tonaufzeichnungen bekannt, ein ursprünglich aufgezeichnetes Original-Tonsignal
nach Abtastung mit einer Tondarbietung zu mischen und in
einer neuen Spur neben der ungelöschten Spur mit dem Ori-

ginal-Tonsignal aufzuzeichnen. Dafür ist eine doppelte Spurenzahl und ein entsprechend großer Bandvorrat erforderlich. Es ist ferner mit der DE-AS 10 71 367 bekannt, bei der Tonaufzeichnung zu einer Grundsignalaufzeichnung auf einem Magnetband eine Zusatzaufzeichnung dadurch aufzubringen, daß die Zusatzsignalaufzeichnung auf einem Teil der Spurbreite der Grundsignalaufzeichnung aufgebracht wird. Praktisch erfolgt das Hinzufügen der Zusatzsignalaufzeichnung damit durch Teil-Überschreiben der Grundsignalaufzeichnung mit kleinerer Spurbreite und/oder versetzt zur Spurlage der Grundsignalaufzeichnung mittels zweier ortsfester Aufzeichnungsköpfe oder eines einzigen vertikal verschiebbaren Aufzeichnungskopfes. Ein solches Überschreiben setzt eine separate Aufzeichnung der Video- und Tonsignale in verschiedenen Magnetspuren voraus.

Es ist weiterhin mit der DE-OS 24 57 636 bekannt, die Toninformation mittels eines separaten Tonkopfes mit Schrägspalt durch Überschreiben der Videoinformation aufzubringen. Dabei besteht die Schwierigkeit, die Video- und Tonsignale bei Wiedergabe einwandfrei voneinander zu trennen.

Der vorliegenden Erfindung liegt die Aufgabe zugrunde, ohne wesentlichen Kapazitätsverlust eine Änderung oder ein Zusetzen von Tonsignalen zu Videosignalen mit einem einzigen Video-Aufzeichnungs-/Wiedergabegerät zu ermöglichen.

Die Aufgabe wird mit einem Verfahren zum Verändern von Videoaufzeichnungen mit oder ohne Audioinformation in Aufzeichnungs-/Wiedergabesystemen mit zueinander parallelen Signalspuren, insbesondere Magnetspuren, auf einem Aufzeichnungsträger, auf dem die Signalspuren ursprünglich aufgezeichnete Signale enthalten, die mittels eines Wiedergabekopfes lesbar sind, erfindungsgemäß gelöst, wenn die Signale einer ersten Signalspur gelesen, verändert und neu aufgezeichnet werden, wobei die Neuaufzeichnung in derselben ersten oder in einer zweiten parallelen Signalspur erfolgt und daß die ursprünglich aufgezeichneten Signale nach Neuaufzeichnung gelöscht werden, um Signalspuren für weitere Neuaufzeichnungen freizumachen.

Eine Anordnung zur Durchführung des erfindungsgemäßen Verfahrens ist in einem und demselben Videoaufzeichnungs-/ Wiedergabegerät mit Aufnahme- und Wiedergabekanälen, in dem die Signale in zueinander parallelen Signalspuren eines Aufzeichnungsträgers, insbesondere eines Magnetaufzeichnungsträgers, mittels eines ersten Aufzeichnungskopfes als ursprünglich aufgezeichnete Signale aufgezeichnet sind, gegeben, wenn die ursprünglich aufgezeichneten Signale einer ersten Signalspur mittels eines ersten Wiedergabekopfes gelesen, die Signale über eine Signalveränderungseinrichtung verändert und mittels eines zweiten Aufzeichnungskopfes in der ersten oder einer zweiten parallelen Signalspur neuaufgezeichnet werden und wenn die Löschung der urspünglich aufgezeichneten Signale nach der Neuaufzeichnung mittels eines Löschkopfes erfolgt.

Bemerkenswerte Vorteile haben das erfindungsgemäße Verfahren und die Anordnung für die Nachvertonung von in Längsspuren aufgezeichneten Video- und Audio-Informationen. Je nach Ausführung ist mindestens eine Spur freizuhalten für die erste Neuaufzeichnung, im Falle, daß direkt nach Übertragung der Information die Originalaufzeichnung gelöscht wird. Es ist jedoch ebenso möglich, mehrere Spuren freizuhalten, derart, daß nur 4 bis 8 % der Gesamt-Spurenzahl für die Nachvertonung verlorengehen. Neben der einfachen Nachvertonung ist bei dem Verfahren und Anordnungen der Erfindung auch die Möglichkeit gegeben, das vorhandene Audiosignal beliebig zu manipulieren, z.B. durch Hall- effekte, gezielte Verzerrungen, Playback und weitere in der Audiotechnik bekannte Trickmaßnahmen.

Nach einer weiteren Ausbildung des erfindungsgemäßen Verfahrens kann nach Neuaufzeichnung in einer anderen Magnetspur ein nochmaliges Lesen und nach Löschen der urspünglich aufgezeichneten Signale eine (Wieder-)Neuaufzeichnung in der einen ersten Magnetspur vorgenommen werden. Dadurch wird es möglich, die neu aufgezeichneten Signale in dieselbe Spur wie die ursprünglich aufgezeichneten Signale zurückzuübertragen. Auch ist dabei eine prophylaktische Kontrolle der Übertragung möglich. In einer Erfindungsmaßnahme ist die andere Magnetspur die Nachbar-Magnetspur. Es kann auch zweckmäßig sein, bewußt Spuren im Abstand von mehreren Spuren neben der Originalspur für die Neuaufzeichnung zu verwenden.

Es kann ferner sinnvoll sein, die Audioinformation des gelesenen Signals von der Videoinformation abzutrennen, durch Hinzufügen oder Fortlassen von Audiosignalteilen zu verändern, wieder mit der Videoinformation zusammenzufassen und damit zusammen neu aufzuzeichnen.

Dadurch ergibt sich die Möglichkeit, nur das Audiosignal zu modifizieren, während das Videosignal im wesentlichen unverändert bleiben kann. Eine weitere Verfahrensmaßnahme kann darin bestehen, nach dem Lesen der ursprünglich aufgezeichneten Signale diese zu löschen. Dadurch wird eine schnelle Übertragung oder Neuaufzeichnung ermöglicht, obwohl dabei auf den Vorteil einer Kontrolle der Übertragung verzichtet wird.

In einer weiteren Variante werden erst nach dem Lesen der neuaufgezeichneten Signale die ursprünglich aufgezeichneten Signale gelöscht. Dadurch ist es günstig möglich, vor dem Löschen der Original-Information das Ergebnis - die Neuaufzeichnung - zu kontrollieren und die Übertragung ggf. unverändert oder modifiziert wiederholen zu können.

Die erfindungsgemäße Anordnung ist dadurch weiter ausbaubar, daß jeder der Magnetspuren ein kombinierter Aufnahme-/Wiedergabemagnetkopf zugeordnet wird, odurch eine gewünschte Kontrolle jederzeit realisierbar ist.

In einer weiteren praktischen Ausbildung ist im Wiedergabekanal der Anordnung der Videoausgang der Einrichtung zum Abtrennen des Audiosignals vom Videosignal mit einer Einrichtung im Aufnahmekanal zum Zusammenfassen der Video- und Audiosignale, insbesondere über einen Schalter, verbunden und der Ausgang eines Umsetzers der am Audioausgang der Einrichtung zum Abtrennen des Audiosignals vom Videosignal liegt an einer Einrichtung zum Ändern des Audiosignals ggf. über den obengenannten Schalter anschließbar ist, wobei letztere Einrichtung mit der Einrichtung im Aufnahmekanal zum Zusammenfassen der Videosignale und Neuaufzeichnen der Audiosignale verbunden ist.

Dadurch kann das Videosignal nach Abtrennen des Audiosignals aber sonst in unverändertem Zustand in den Aufnahmekanal zur Neuaufzeichnung übertragen werden, und es können im wesentlichen bereits vorhandene Schaltungsteile des Videorekorders benutzt werden.

Eine weitere Ausgestaltung der Anordnung wird darin gesehen, daß mindestens einem der Magnetköpfe beiderseits je ein Löschkopf zugeordnet ist, so daß unabhängig jeweils nach dem Lesen oder vor dem Neuaufzeichnen die jeweilige Spur löschbar ist. In zweckmäßiger weiterer Ausbildung sind die Aufnahme-/Wiedergabeköpfe senkrecht zur Bandoberfläche und auf einer Querachse zur Bandlaufrichtung angeordnet, wodurch die Lese- und Aufzeichnungsvorgänge ohne Verzögerung aneinanderanschließen.

Einzelheiten der vorliegenden Erfindung sind der nachfolgenden Beschreibung und Zeichnung von Ausführungsbeispielen entnehmbar.

Übertragung der 4 Spuren (entsprechend einem Zeitraum von 10 Minuten bei 2,5 Minuten Durchlaufzeit einer Spurlänge) wird der Bandtransport gestoppt. Der Benutzer hat nunmehr die Wahl, mit dem Nachvertonen fortzufahren oder aber sich die Information der nachvertonten Spuren zur Kontrolle anzuhören, bevor die Originalsignale a bis d gelöscht werden. Wird von der "Kontrolle" Gebrauch gemacht, muß die aus Köpfen UK und OK und den Löschköpfen bestehende Kopfeinheit um 4 Spuren zurückgefahren werden, so daß die Spuren Nr. 1 bis 4 mittels des Kopfes OK gelesen werden. Ist der Benutzer mit dem Ergebnis der ersten Nachvertonung nicht zufrieden, wird die Nachvertonung wiederholt durch Abtasten der Spur Nr. 5 mittels Kopfes UK, Löschen der Signale der 1. Nachvertonung mittels Kopfes LK4 und Neuaufzeichnen der Signale A bis D mittels Kopfes OK.

Es ist auch möglich, durch Vertauschen der Kopffunktionen die bereits ein erstes Mal nachvertonten Signale noch ein zweites Mal nachzuvertonen, allerdings sind die Verluste dann kaum noch vernachlässigbar. In Kurzform folgen dabei die Verfahrensschritte aufeinander:

1.  Nachvertonung

Abtasten (a) mit UK, Neuaufzeichnung (A) mit OK, zeitlich dazwischen Löschkopf LK4 aktiviert zum Freilöschen

2.    Nachvertonung (nach Vertauschen der Funktionen von
      UK und OK)

Abtasten (A) mit OK, Neuaufzeichnen (A') mit UK, zeitlich
dazwischen Freilöschen von US durch LK1 (Löschen des Originalsignals a). Es ist durch zeitlich und funktionsmäßig
richtiges An- und Abschalten der Löschköpfe möglich, zwischen den Signalübertragungsvorgängen ein Kontrollhören
und eine Korrektur etwaiger Fehlübertragungen zu ermöglichen.

Vorteile der beschrieben Verfahrensausführungen werden
in folgendem gesehen:

0010716

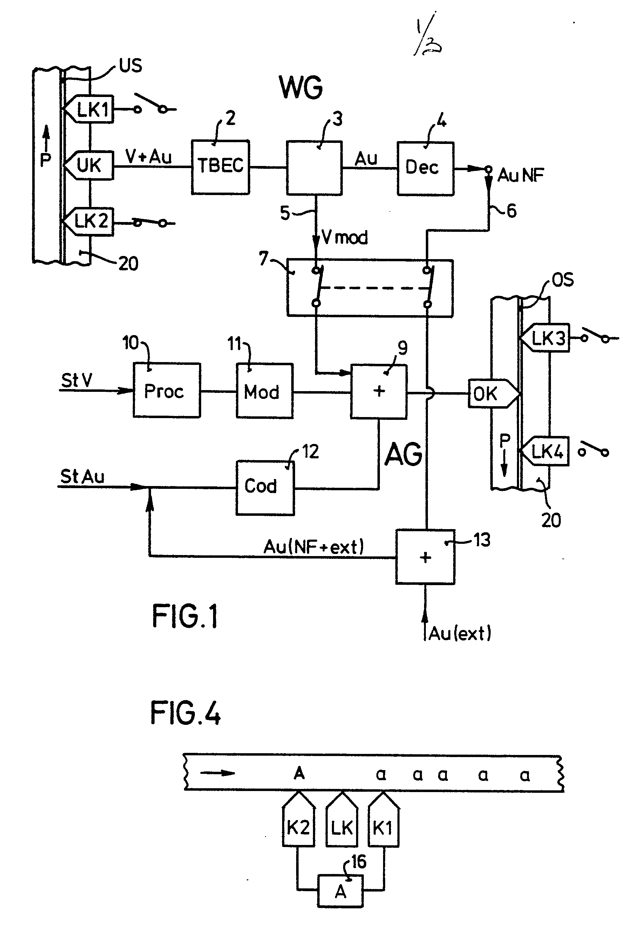

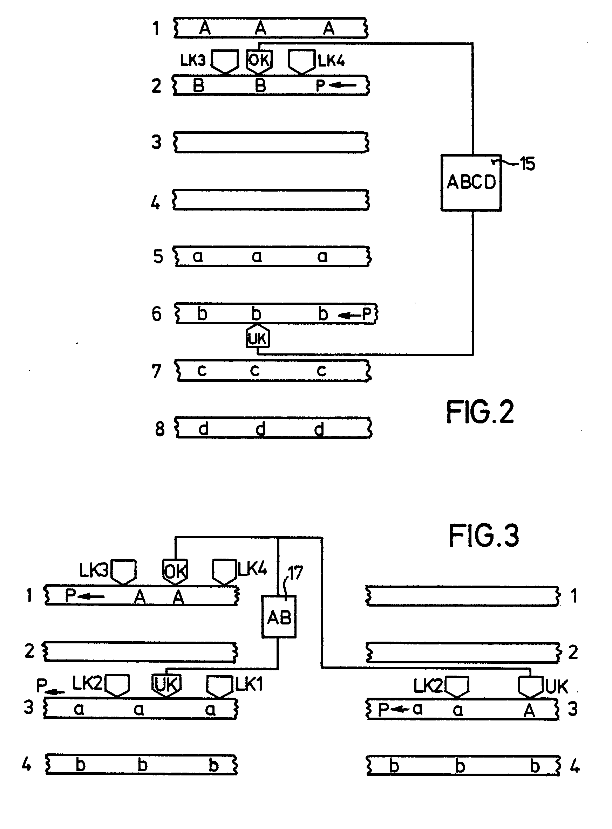

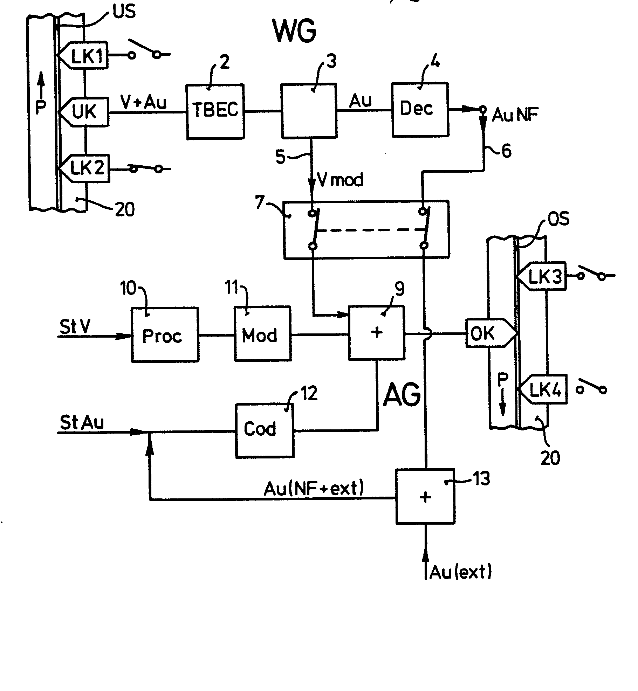

Patentansprüche

1.  Verfahren zum Verändern von Videoaufzeichnungen mit
oder ohne Audioinformation in Aufzeichnungs-/Wiedergabesystemen mit zueinander parallelen Signalspuren,
insbesondere Magnetspuren, auf einem Aufzeichnungsträger, auf dem die Signalspuren urspünglich aufgezeichnete Signale enthalten, die mittels eines Aufnahmekopfes aufzeichenbar sind, dadurch gekennzeichnet, daß die Signale einer ersten Signalspur (OS)
gelesen, verändert und neu aufgezeichnet werden, wobei die Neuaufzeichnung in derselben ersten oder
in einer zweiten parallelen Signalspur (US) erfolgt
und daß die ursprünglich aufgezeichneten Signale
nach Neuaufzeichnung gelöscht werden, um Signalspuren für weitere Neuaufzeichnungen freizumachen.

2.  Verfahren nach Anspruch 1, dadurch gekennzeichnet,
daß nach Neuaufzeichnung in einer zweiten Signalspur (OS) ein nochmaliges Lesen und nach Löschen
der ursprünglich aufgezeichneten Signale eine
(Wieder-)Neuaufzeichnung in der ersten Signalspur
(US) erfolgt.

3.  Verfahren nach Anspruch 1 oder 2, dadurch gekennzeichnet, daß die zweite Signalspur (OS) die nächstfolgende Signalspur mit derselben Bandlaufrichtung
(P) ist.

4.  Verfahren nach Anspruch 1 bis 3, dadurch gekennzeichnet, daß ein Teilsignal des gelesenen Signals
vom ursprünglich aufgezeichneten Signal getrennt,
durch Hinzufügen/Fortlassen von Signalen verändert,
wieder mit dem ursprünglich aufgezeichneten Signal
zusammengefaßt und damit zusammen neuaufgezeichnet
wird.

5.  Verfahren nach Anspruch 4, wobei das ursprünglich aufgezeichnete Signal aus Video- und Audioinformation
    besteht, dadurch gekennzeichnet, daß das Teilsignal
    die Audioinformation (Au) ist, die von der Videoinformation (Vmod) getrennt, verändert und damit zu-
    sammengefaßt neuaufgezeichnet wird.

6.  Verfahren nach Ansprüchen 1 bis 5, dadurch gekenn-
    zeichnet, daß unmittelbar nach dem Lesen der ursprünglich aufgezeichneten Signale diese gelöscht
    werden.

7.  Verfahren nach Ansprüchen 1 bis 5, dadurch gekenn-
    zeichnet, daß nach dem Lesen der neu aufgezeichneten
    Signale die ursprünglich aufgezeichneten Signale gelöscht werden.

8.  Anordnung zum Verändern von Videoaufzeichnungen mit
    oder ohne Audioinformation in einem einzigen Video-
    -Aufzeichnungs-/Wiedergabegerät mit Aufnahme- und
    Wiedergabekanälen, in dem die Signale in zueinander
    parallelen Signalspuren eines Aufzeichnungsträgers,
    insbesondere eines Magnetaufzeichnungsträgers, mittels eines ersten Aufzeichnungskopfes als ursprünglich aufgezeichnete Signale aufgezeichnet sind, dadurch gekennzeichnet, daß die ursprünglich aufgezeichneten Signale einer ersten Signalspur (US) mittels eines ersten Wiedergabekopfes (K1, UK) gelesen,
    die Signale über eine Signalveränderungseinrichtung
    (13) verändert und mittels eines zweiten Aufzeichnungskopfes (K2, OK) in der ersten oder zweiten parallelen Signalspur (US bzw. OS) neuaufgezeichnet
    werden und daß die Löschung der ursprünglich aufgezeichneten Signale nach der Neuaufzeichnung mittels
    eines Löschkopfes (LK oder LK1-LK4) erfolgt.

0010716

9. Anordnung nach Anspruch 8, dadurch gekennzeichnet, daß der zweiten Magnetspur (OS) auch ein Wiedergabemagnetkopf, insbesondere in kombinierter Aufzeichnungs-/Wiedergabekopf zugeordnet ist.

10. Anordnung nach Ansprüchen 8 und 9, dadurch gekennzeichnet, daß mindestens einem Aufzeichnungskopf an jeder Seite je ein Löschkopf zugeordnet ist.

11. Anordnung nach Ansprüchen 8 und 9, dadurch gekennzeichnet, daß der ersten und zweiten Signalspur (US u. OS) ein kombinierter Aufnahme-/Wiedergabemagnetkopf (UK, OK) zugeordnet ist.

12. Anordnung nach Ansprüchen 8 und 9, dadurch gekennzeichnet, daß die Aufnahme-/Wiedergabemagnetköpfe auf Achsen senkrecht zu Bandebene und Bandlaufrichtung (P) angeordnet sind.

13. Anordnung nach Anspruch 8, dadurch gekennzeichnet, daß im Wiedergabekanal (WG) eine Einrichtung (3) zum Abtrennen des Audiosignals (Au) vom Videosignal (Vmod) vorgesehen ist, deren Videoausgang mit einer Einrichtung (9) im Aufnahmekanal (AG) zum Zusammenfassen der Video- und Audiosignale über einen Schalter (7) verbunden ist, und daß am Audioausgang der Einrichtung (3) zum Abtrennen des Audiosignals vom Videosignal ein Umsetzer vorgesehen ist, dessen Ausgang an die Signalveränderungseinrichtung anschaltbar ist, wobei der Ausgang der Signalveränderungseinrichtung (13) mit dem Eingang der Einrichtung (9) zum Zusammenfassen der Video- und Audiosignale verbunden ist.

14. Anordnung nach Ansprüchen 8 bis 13, <u>dadurch gekenn-zeichnet</u>, daß die Signalveränderungseinrichtung eine Audiosignalquelle (Auext) ist.

15. Anordnung nach Anspruch 13, <u>dadurch gekennzeichnet</u>, daß zwischen der Signalveränderungseinrichtung (13) und der Einrichtung (9) zum Signalzusammenfassen ein Modulator (12) eingeschaltet ist.

0010716

1/3

US

LK1

P

UK   V+Au   TBEC   (2)   (3)   Au   Dec   (4)   Au NF

WG

LK2

20   5   6

V mod

7

OS

LK3

StV → Proc (10) → Mod (11) → + (9) → OK → P

LK4

StAu → Cod (12)

AG   20

Au(NF+ext)   + (13)

FIG.1

Au(ext)

FIG.4

A   a   a   a   a   a

K2   LK   K1

A (16)

0050 / 033 500

FIG.2

FIG.3

0010716

2/3

0050/033 500

Europäisches
Patentamt

**EUROPÄISCHER RECHERCHENBERICHT**

Nummer der Anmeldung

EP 79 10 4082

| Kategorie | EINSCHLÄGIGE DOKUMENTE Kennzeichnung des Dokuments mit Angabe, soweit erforderlich, der maßgeblichen Teile | betrifft Anspruch | KLASSIFIKATION DER ANMELDUNG (Int.Cl. ⁴) |
|---|---|---|---|
| | JOURNAL OF THE SOCIETY OF MOTION PICTURE ENGINEERS, Vol. 87, Nr. 8 August 1978, New York US EDEN-EADON: "Sypher: Videotape Sound Post Dubbing" Seiten 504-507 * Bilder 6 und 7; Seite 506, linke Spalte, Zeile 13 - rechte Spalte, Zeile 2 * | 1-5,8, 9,12- 15 | G 11 B 27/08// G 11 B 27/02 H 04 N 5/78 |
| | GB - A - 961 951 (TELEFUNKEN) * Bilder 1-2; Seite 1, Zeile 62 - Seite 2, Zeile 130 * | 1-3,6- 14 | RECHERCHIERTE SACHGEBIETE (Int. Cl. ⁴) |
| | US - A - 3 223 790 (BRANDT) * Bild; Spalte 2, Zeile 28 - Spalte 3, Zeile 16 * | 1-5,8, 9,12- 15 | G 11 B 27/08 G 11 B 27/02 H 04 N 5/78 G 11 B 5/02 |
| | DE - A - 2 653 345 (BASF) * Bilder 1-3; Seite 4, Zeile 9 - Seite 6, Zeile 17 * | 1,2,4- 9,12, 13 | |
| A | DE - A - 1 572 465 (LOSCHER) * Ganzes Dokument * | 1 | KATEGORIE DER GENANNTEN DOKUMENTE |
| A | US - A - 3 011 031 (LOEWE et al.) * Spalte 2, Zeilen 12-72 * | 1 | X: von besonderer Bedeutung A: technologischer Hintergrund O: nichtschriftliche Offenbarung P: Zwischenliteratur T: der Erfindung zugrunde liegende Theorien oder Grundsätze E: kollidierende Anmeldung D: in der Anmeldung angeführtes Dokument L: aus andern Gründen angeführtes Dokument &: Mitglied der gleichen Patentfamilie, übereinstimmendes Dokument |
| | Der vorliegende Recherchenbericht wurde für alle Patentansprüche erstellt. | | |

| Recherchenort | Abschlußdatum der Recherche | Prüfer |
|---|---|---|
| Den Haag | 04-02-1980 | CARTRIJSSE |

EPA form 1503.1 06.78